# EUROPEAN PATENT APPLICATION

(11) **EP 4 845 227 A1**
(43) Date of publication of application: **25.11.2026**
(21) Application number: 24925899.7
(22) Date of filing: 22.02.2024
(51) Int. Cl.: H04W 36/24, H04W 36/38

(54) **INFORMATION PROCESSING DEVICE, INFORMATION PROCESSING METHOD, AND INFORMATION PROCESSING PROGRAM**

(71) Applicant: Softbank Corp., Tokyo 105-7529 (JP)
(72) Inventor: TAMURA, Shun, Tokyo 105-7529 (JP)
(74) Representative: SSM Sandmair
(86) International application number: PCT/JP2024/006639
(87) International publication number: WO 2025/177568

(57) **Abstract**

An information processing device according to the present application includes a collection unit, a generation unit, and a control unit. The collection unit collects pieces of metric information respectively indicating a metric in a plurality of microservices built on a microservice architecture in each of a plurality of MEC devices respectively provided to correspond to a plurality of base stations different from each other in a mobile communication network. The generation unit generates, in a case where it is determined, based on the metric information collected by the collection unit, to perform switching of the microservices between the plurality of MEC devices in an application being used by a user of a wireless terminal in which handover is being performed between the plurality of base stations, information related to the switching. The control unit causes the plurality of MEC devices to execute switching of the microservices being used by the user based on the information generated by the generation unit.

## Description

### Field

The present invention relates to an information processing device, an information processing method, and an information processing program.

### Background

In recent years, multi-access edge computing (MEC) devices have attracted attention. Since the MEC device is disposed in a mobile communication network or the like, the MEC device has a low communication delay with a wireless terminal as compared with a device disposed in a cloud environment. As a result, a response time of an application can be shortened.

Patent Literature 1 proposes a technique in which an edge server that provides a service to a user of a wireless terminal is provided to correspond to each base station, and a handover-destination base station of the wireless terminal is determined using a resource usage rate for service provision.

### Citation List

### Patent Literature

Patent Literature 1: JP 2018-113589 A

### Summary

### Technical Problem

However, in the technique described in Patent Literature 1, since a handover condition is that an edge server corresponding to a handover-destination base station of a wireless terminal provides a service to a user of the wireless terminal, the handover-destination base station is limited.

An object of the present application is to provide an information processing device, an information processing method, and an information processing program capable of more appropriately providing a service by the MEC device during a handover of a wireless terminal.

### Solution to Problem

An information processing device according to the present application includes a collection unit, a generation unit, and a control unit. The collection unit collects pieces of metric information respectively indicating a metric in a plurality of microservices built on a microservice architecture in each of a plurality of MEC devices respectively provided to correspond to a plurality of base stations different from each other in a mobile communication network. The generation unit generates, in a case where it is determined, based on the metric information collected by the collection unit, to perform switching of the microservices between the plurality of MEC devices in an application being used by a user of a wireless terminal in which handover is being performed between the plurality of base stations, information related to the switching. The control unit causes the plurality of MEC devices to execute switching of the microservices being used by the user based on the information generated by the generation unit.

In addition, the collection unit collects information including information indicating a delay status in the microservices as the metric information, and the generation unit determines, based on the delay status, whether to perform switching of the microservices between the plurality of MEC devices.

In addition, the generation unit determines whether to perform switching of the microservices between the plurality of MEC devices based on a comparison result of delays in the microservices before and after switching between the plurality of MEC devices.

In addition, the collection unit collects, as the metric information, information including information indicating a resource usage status in the microservices, and the generation unit determines, based on the delay status and the resource usage status, whether to perform switching of the microservices between the plurality of MEC devices.

In addition, the generation unit determines whether to perform switching of the microservices between the plurality of MEC devices based on comparison results of delays and resources in the microservices before and after switching between the plurality of MEC devices.

In addition, the plurality of microservices include services using AI.

An information processing method executed by a computer, the method includes a collection step of collecting pieces of metric information respectively indicating a metric in a plurality of microservices built on a microservice architecture in each of a plurality of MEC devices respectively provided to correspond to a plurality of base stations different from each other in a mobile communication network, a generation step of generating, in a case where it is determined, based on the metric information collected by the collection step, to perform switching of the microservices between the plurality of MEC devices in an application being used by a user of a wireless terminal in which handover is being performed between the plurality of base stations, information related to the switching, and a control step of causing the plurality of MEC devices to execute switching of the microservices being used by the user based on the information generated by the generation step.

An information processing program causing a computer to execute a collection procedure of collecting pieces of metric information respectively indicating a metric in a plurality of microservices built on a microservice architecture in each of a plurality of MEC devices respectively provided to correspond to a plurality of base stations different from each other in a mobile communication network, a generation procedure of generating, in a case where it is determined, based on the metric information collected by the collection procedure, to perform switching of the microservices between the plurality of MEC devices in an application being used by a user of a wireless terminal in which handover is being performed between the plurality of base stations, information related to the switching, and a control procedure of causing the plurality of MEC devices to execute switching of the microservices being used by the user based on the information generated by the generation procedure.

### Advantageous Effects of Invention

According to an aspect of the embodiment, it is possible to more appropriately provide a service by the MEC device during a handover of a wireless terminal.

### Brief Description of Drawings

FIG. 1 is a diagram illustrating an example of a mobile communication network including a MEC device according to an embodiment.
FIG. 2 is a diagram illustrating a configuration example of an information processing device according to the embodiment.
FIG. 3 is a diagram illustrating an example of a form of collection of metric information by a collection unit of the information processing device according to the embodiment.
FIG. 4 is a diagram illustrating an example of a form of switching control of a target microservice from a switching source MEC device to a switching destination MEC device by a control unit of the information processing device according to the embodiment.
FIG. 5 is a sequence diagram illustrating an information processing procedure according to the embodiment.
FIG. 6 is a hardware configuration diagram illustrating an example of a computer that implements functions of the information processing device. Description of Embodiments

Hereinafter, an embodiment (hereinafter, referred to as "embodiment") for implementing an information processing device, an information processing method, and an information processing program according to the present application will be described in detail with reference to the drawings. Note that the information processing device, the information processing method, and the information processing program according to the present application are not limited by the embodiment. In addition, in the following embodiment, the same parts are denoted by the same reference numerals, and redundant description will be omitted.

### (Embodiment)

### [1. Introduction]

In the present embodiment, a multi-access edge computing (MEC) device is adopted as a device that provides a service using an application such as software as a service (SaaS).

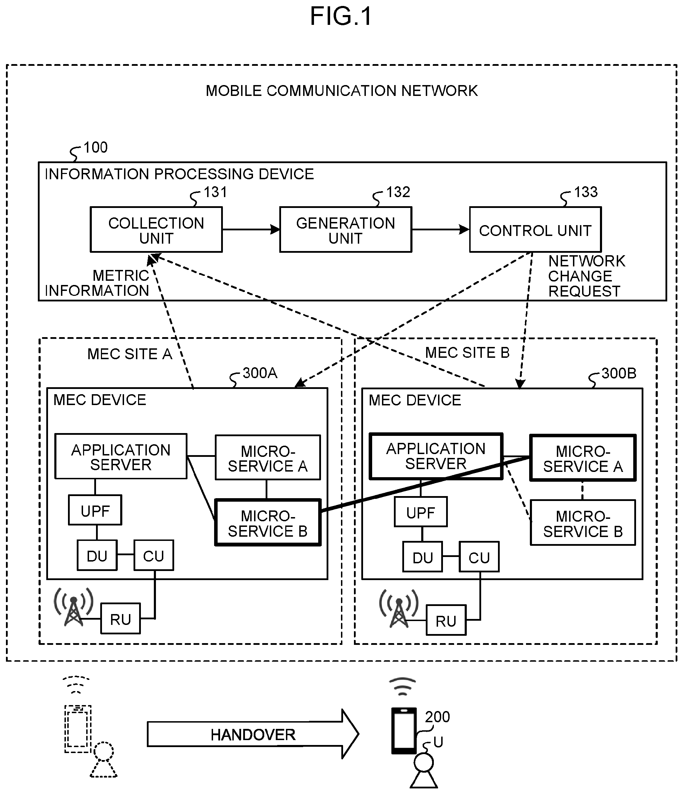

The MEC device in the present embodiment is disposed in, for example, a mobile communication network such as a 5^{th} generation mobile communication system, and can perform communication with a wireless terminal of a user. FIG. 1 is a diagram illustrating an example of a mobile communication network including a MEC device according to an embodiment. The mobile communication network according to the present embodiment includes, for example, a RAN intelligent controller (RIC). The RIC performs, for example, controlling, optimization, and the like of a radio access network (RAN) function.

In the mobile communication network illustrated in FIG. 1, a plurality of MEC devices including MEC devices 300A and 300B are disposed. The plurality of MEC devices are respectively provided to correspond to base stations different from each other in the mobile communication network.

Each of the MEC devices 300A and 300B is disposed, for example, at a base station or a location near a base station in a mobile communication network, but may be connected to a node in a core network of the mobile communication network or may be connected to a node in a path between the core network and the base station of the mobile communication network. Hereinafter, in a case where each of the MEC devices 300A and 300B is not individually distinguished, the MEC devices 300A and 300B may be referred to as MEC devices 300.

The MEC device 300A is disposed at a MEC site A, and the MEC device 300B is disposed at a MEC site B. Each of the MEC site A and the MEC site B includes a radio unit (RU) that transmits and receives radio waves to and from a wireless terminal 200 and performs analog/digital conversion on signals.

In each of the MEC device 300A and the MEC device 300B, a distributed unit (DU), a central unit (CU), a user plane function (UPF), and the like are disposed.

In addition, in each of the MEC devices 300A and 300B, an application server built on a microservice architecture and a plurality of microservices are implemented for each application. Hereinafter, the application implemented in the MEC devices 300A and 300B may be referred to as a MEC application.

The application server functions as, for example, an endpoint that is an entrance of communication from the UPF, and each microservice is accessed through an application server of a corresponding MEC application. Note that, in the MEC application, the application server is also built as a microservice, but may be built as a component other than the microservice.

In the example illustrated in FIG. 1, an application server, a microservice A, and a microservice B in one MEC application are illustrated. The MEC application is, for example, a MEC application that provides an AI chat service using generative artificial intelligence (AI) such as large language models (LLM).

The AI chat service receives a question or a request of the user U, searches for data based on the received question or the received request, and generates and outputs an answer by the generative AI based on the search result.

In this case, the microservice A is, for example, a microservice that performs inference processing by a generative AI as an AI inference server, and the microservice B is, for example, a microservice that performs processing of searching for data required for performing inference in the microservice A as a search server. However, the present disclosure is not limited to such an example.

In the AI chat service, a question or a request of the user U is received by the application server, and the application server outputs the received question or request of the user U to the microservice A and the microservice B.

The microservice B performs searching on a database as a search according to a question or a request of the user U, and outputs a search result to the microservice A. The microservice A generates an answer to the question or the request of the user U by using the generative AI based on the search result in the microservice B, and outputs the generated answer to the application server. The application server provides the answer generated by the microservice B to the user U.

Here, in a case where the user U who is using the MEC application provided by the MEC device 300A in the MEC site A is moving, a handover of the wireless terminal 200 from the base station in the MEC site A to the base station in the MEC site B is performed.

Note that, in the above-described example, the application server is connected to the microservice A and the microservice B, and the microservice A and the microservice B are connected. However, the connection relationship is not limited to the above-described example.

In the handover from the base station in the MEC site A to the base station in the MEC site B, switching of the UPF is performed, and based on the switching of the UPF, switching of the application server of the MEC application that is in use by the user U is performed. Note that the switching of the UPF is also referred to as replacement of the UPF.

In addition, in the present embodiment, for the microservices A and B, a delay status, a resource use status, and the like in the microservices A and B are monitored using distributed tracing, and an appropriate execution site is selected.

In the mobile communication network illustrated in FIG. 1, an information processing device 100 is disposed to cause the microservices A and B to be executed at an appropriate EMC site. The information processing device 100 includes a collection unit 131, a generation unit 132, and a control unit 133.

The collection unit 131 collects, as metric information of the microservices A and B, metric information indicating a delay (latency) status of each of the microservices A and B, metric information indicating a resource usage status in each of the microservices A and B, and the like from the MEC devices 300A and 300B.

The metric indicating the delay status is a metric indicating a delay time, and is, for example, a metric indicating a delay time due to a processing delay, but may be a metric indicating a delay time including a communication delay in addition to a processing delay. The metric indicating the resource usage status includes, for example, a processor usage rate, a memory usage rate, and the like. The processor usage rate is, for example, a usage rate of a central processing unit (CPU).

The generation unit 132 determines whether to perform switching of the microservices A and B of the EMC application being used by the user U of the wireless terminal 200 in a handover state, between the plurality of MEC devices 300A and 300B, based on the metric information collected by the collection unit 131.

Here, for convenience of description, in a case where each of the microservices A and B is not individually distinguished, the microservices A and B are described as microservices X, and switching of the microservices X between the plurality of MEC devices 300A and 300B will be described.

In the MEC device 300B, in a case where, in the microservices X, there is a margin in resources and a delay is small, the generation unit 132 determines to perform switching of the microservices X used by the user U from the MEC device 300A to the MEC device 300B. On the other hand, in the MEC device 300B, in a case where, in the microservices X, there is no margin in resources or a delay is large, the generation unit 132 determines not to perform switching of the microservices X used by the user U from the MEC device 300A to the MEC device 300B.

In addition, the generation unit 132 can compare a delay and resources in the microservices X of the MEC device 300A with a delay and resources in the microservices X of the MEC device 300B, and determine whether to perform switching of the microservices X from the MEC device 300A to the MEC device 300B based on a comparison result.

In a case where it is determined to perform switching of the microservices X from the MEC device 300A to the MEC device 300B, the generation unit 132 generates network change information that is information related to switching of the microservices X from the MEC device 300A to the MEC device 300B, and outputs the generated network change information to the control unit 133.

The control unit 133 outputs a network change request for switching the microservices X from the MEC device 300A to the MEC device 300B to the MEC device 300A and the MEC device 300B based on the switching information which is output from the generation unit 132.

Accordingly, the microservice determined to require switching in the application being used by the user U is switched from the MEC device 300A to the MEC device 300B, and the microservice determined not to require switching is not switched to the MEC device 300B and is provided by the MEC device 300A.

As described above, the information processing device 100 determines whether to perform switching of the microservices between the MEC devices 300 according to the delay or the resources, and thus, it is possible to more appropriately provide the service by the MEC device 300 during the handover of the wireless terminal 200.

Note that, in the example described above, the information processing device 100 uses the resource status to determine whether to perform switching of the microservices between the MEC devices 300. However, in a case where the resources can be secured, the resource status can be excluded from the determination condition. In addition, the information processing device 100 may be disposed in any of the MEC devices 300 at a plurality of MEC sites, or may be disposed as a MEC device different from the MEC device 300 at the MEC site.

In addition, the metric information may include metric information of the application server. The information processing device 100 can more accurately determine whether to perform switching of microservices between the MEC devices 300 by using the metric information of the application server. Hereinafter, a specific configuration and processing of the information processing device 100 according to the embodiment will be described in more detail.

### [2. Configuration of Information Processing Device 100]

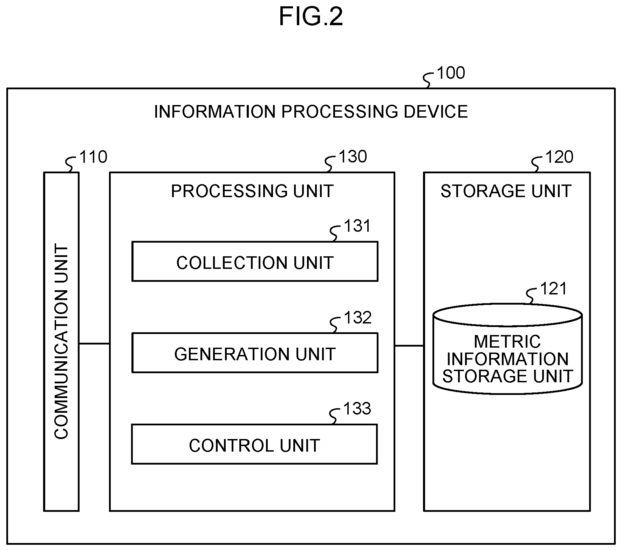

FIG. 2 is a diagram illustrating a configuration example of the information processing device 100 according to the embodiment. The information processing device 100 includes a communication unit 110, a storage unit 120, and a processing unit 130.

### [2.1. Communication Unit 110]

The communication unit 110 is implemented by, for example, a communication module or a network interface card (NIC). Then, the communication unit 110 is connected to a network of a mobile communication network in a wired or wireless manner, and transmits and receives information to and from, for example, the MEC devices 300A and 300B.

### [2.2. Storage Unit 120]

The storage unit 120 is implemented by, for example, a random access memory (RAM), a semiconductor memory element such as a flash memory, a hard disk, or a storage device such as an optical disk. The storage unit 120 includes a metric information storage unit 121. The metric information storage unit 121 stores the metric information collected by the processing unit 130 from each of the MEC devices 300.

### [2.3. Processing Unit 130]

The processing unit 130 is a controller, and is implemented by, for example, a processor such as a CPU, a micro processing unit (MPU), or a general purpose graphic processing unit (GPGPU), which executes various programs (corresponding to an example of an information processing program) stored in a storage device in the information processing device 100 using a RAM or the like as a work area.

In addition, the processing unit 130 is a controller, and may be implemented by, for example, an integrated circuit such as an application specific integrated circuit (ASIC) or a field programmable gate array (FPGA).

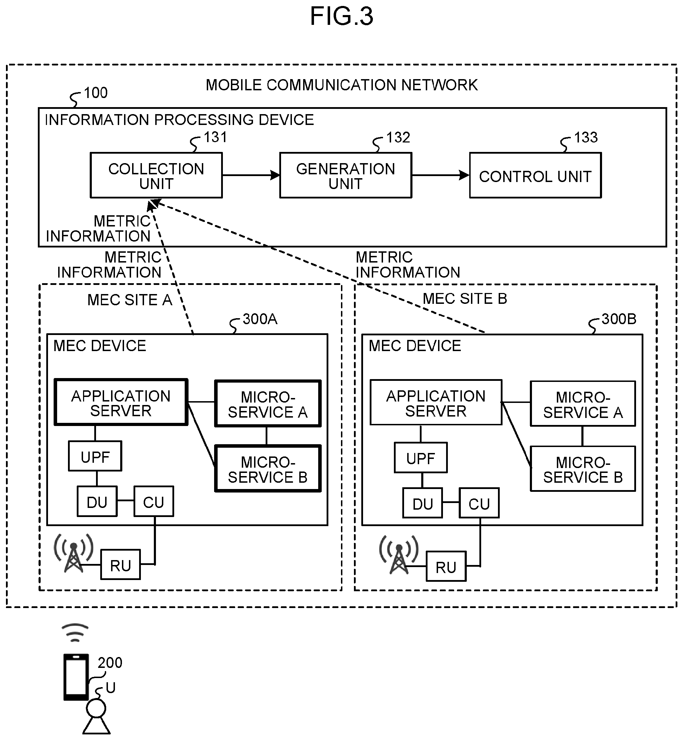

As illustrated in FIG. 2, the processing unit 130 includes a collection unit 131, a generation unit 132, and a control unit 133, and implements or executes functions and operations of information processing to be described below. Note that the internal configuration of the processing unit 130 is not limited to the configuration illustrated in FIG. 3, and may be another configuration as long as information processing to be described later is performed.

### [2.3.1. Collection Unit 131]

The collection unit 131 collects various types of information via the communication unit 110 and the like.

For example, the collection unit 131 collects pieces of metric information respectively indicating a metric in the plurality of microservices built on a microservice architecture in each of the plurality of MEC devices 300 respectively provided to correspond to a plurality of base stations different from each other in a mobile communication network.

The metric in the microservices includes a metric indicating a delay (latency) status, a metric indicating a resource usage status in the microservices, and the like. The metric indicating the delay status is a metric indicating a delay time or a metric indicating a processing delay. The metric indicating the resource usage status includes, for example, a processor usage rate, a memory usage rate, and the like. The processor usage rate is, for example, a CPU usage rate.

For example, the collection unit 131 collects, as the metric information, information including information indicating a delay status in each of the microservices of the plurality of MEC devices 300. In addition, the collection unit 131 collects, as the metric information, information including information indicating a resource usage status in each of the microservices of the plurality of MEC devices 300.

In addition, the collection unit 131 collects, as the metric information, information including information indicating a communication delay between the plurality of MEC devices 300 as a metric. In addition, the collection unit 131 collects, as the metric information, information including information indicating availability of resources in each of the MEC devices 300 as a metric.

FIG. 3 is a diagram illustrating an example of a form of collection of metric information by the collection unit 131 of the information processing device 100 according to the embodiment. In the example illustrated in FIG. 3, the user U of the wireless terminal 200 uses an application implemented in the MEC device 300A at the MEC site A, and the application server and the microservices A and B of the application being used by the user U are highlighted.

As illustrated in FIG 3, the collection unit 131 collects metric information from the plurality of MEC devices including the MEC device 300A and the MEC device 300B. The metric information collected from the MEC device is, for example, metric information of the application server and each of the microservices A and B. The collection of the metric information from the plurality of MEC devices is repeatedly performed at a predetermined cycle. In addition, in a case where there is a handover request from the wireless terminal 200 in addition to a predetermined cycle, the collection unit 131 collects metric information from a switching source MEC device and a switching destination MEC device.

### [2.3.2. Generation Unit 132]

Based on the metric information collected by the collection unit 131, the generation unit 132 determines, for each microservice, whether to perform switching of the microservices between the plurality of MEC devices 300 in the application being used by the user U of the wireless terminal 200 in which the handover is being performed between the plurality of base stations.

Here, the MEC device 300 at the MEC site including the base station to which the wireless terminal 200 is connected before the handover is referred to as a switching source MEC device, and the MEC device 300 at the MEC site including the base station to which the wireless terminal 200 is connected after the handover is referred to as a switching destination MEC device. In addition, the microservice in the application being used by the user U is referred to as a target microservice.

The generation unit 132 determines, for each target microservice, whether to perform switching of the target microservice from the switching source MEC device to the switching destination MEC device, for example, based on a resource status and a delay status of the target microservice in the switching destination MEC device.

The delay of the target microservice in the switching source MEC device is a delay in a case where the application server is switched to the switching destination MEC device, and is a delay including a processing delay in the target microservice of the switching source MEC device and a communication delay between the switching source MEC device and the switching destination MEC device.

For example, in a case where the resource status and the delay status of the target microservice in the switching destination MEC device satisfy a predetermined condition, the generation unit 132 determines to perform switching of the target microservice from the switching source MEC device to the switching destination MEC device.

In addition, in a case where the resource status and the delay status of the target microservice in the switching destination MEC device do not satisfy a predetermined condition, the generation unit 132 determines not to perform switching of the target microservice from the switching source MEC device to the switching destination MEC device.

The predetermined condition is a condition for each microservice, and is, for example, a condition that there is a margin in resources and a delay is small. When determining whether or not there is a margin in resources, whether or not there is a margin in resources is determined, for example, by setting a threshold value for each microservice and determining whether or not availability of the processor is equal to or higher than the threshold value and availability of the memory is equal to or higher than the threshold value. In addition, when determining whether or not the delay is small, whether or not the delay is small is determined, for example, by setting a threshold value for each microservice and determining whether or not the delay time is equal to or shorter than the threshold value.

For example, the generation unit 132 determines that there is a margin in resources in a case where availability of the processor is equal to or higher than the threshold value and availability of the memory is equal to or higher than the threshold value, and determines that there is no margin in resources in a case where availability of the processor is lower than the threshold value or availability of the memory is lower than the threshold value. In addition, the generation unit 132 determines that the delay is large in a case where the delay time is equal to or shorter than the threshold value, and determines that the delay is small in a case where the delay time is longer than the threshold value.

As described above, in a case where, in the target microservice in the switching destination MEC device, there is a margin in resources and the delay is small, the generation unit 132 determines to perform switching of the target microservice from the switching source MEC device to the switching destination MEC device.

On the other hand, in a case where, in the target microservice in the switching destination MEC device, there is no margin in resources or the delay is large, the generation unit 132 determines not to perform switching of the target microservice from the switching source MEC device to the switching destination MEC device.

In addition, the generation unit 132 can also compare the delay and the resources in the target microservice in the switching source MEC device with the delay and the resources in the target microservice in the switching destination MEC device. In this case, the generation unit 132 determines whether to perform switching of the target microservice from the switching source MEC device to the switching source MEC device based on the comparison result.

For example, the generation unit 132 determines whether or not the availability of the resources in the target microservice in the switching destination MEC device is higher than the availability of the resources in the target microservice in the switching source MEC device by a threshold value or more. For example, the generation unit 132 determines whether or not the availability of the processor and the availability of the memory are equal to or higher than threshold values different from each other.

In addition, the generation unit 132 determines whether or not the delay in the target microservice in the switching destination MEC device is smaller than the delay in the target microservice in the switching source MEC device by a threshold value or more.

The generation unit 132 determines to perform switching of the target microservice from the switching source MEC device to the switching source MEC device in a case where it is determined that, as compared with the case of the switching source MEC device, the availability of the resources in the target microservice of the switching destination MEC device is equal to or higher than the threshold value and the delay is smaller than the threshold value.

In addition, the generation unit 132 determines not to perform switching of the target microservice from the switching source MEC device to the switching source MEC device in a case where it is determined that, as compared with the case of the switching source MEC device, the availability of the resources in the target microservice of the switching destination MEC device is not equal to or higher than the threshold value or the delay is not smaller than the threshold value.

In addition, in a case where the target application is not in the switching destination MEC device, the generation unit 132 can also estimate the resource status and the delay status of the target application in a case where the target application is deployed to the switching destination MEC device, based on the resource status of the switching destination MEC device.

In this case, the generation unit 132 can determine whether to perform switching of the target microservice from the switching source MEC device to the switching destination MEC device by a determination method similar to the above-described determination method, based on the estimated resource status and the estimated delay status.

In addition, the generation unit 132 can determine switching of the microservice between the MEC devices 300 based on a delay or resources of the application server in addition to the delay or the resources of the microservice.

For example, the generation unit 132 predicts a future delay status and a future resource status of the microservice, for each of the MEC devices 300, based on the delay status and the resource status of the microservice and the delay status and the resource status of the application server. Then, the generation unit 132 can determine whether to perform switching of the microservice between the MEC devices 300 based on the predicted result.

In addition, the generation unit 132 can also maintain the application in the switching source MEC device in a case where it is determined that there is no margin in the availability of the resources in the application server of the switching destination MEC device (for example, the availability is lower than the threshold value) or in a case where it is determined that the delay is large (for example, the delay is equal to or larger than the threshold value) based on the metric information of the application server.

Note that a method of determining switching of the microservice between the MEC devices 300 by the generation unit 132 is not limited to the above-described example, and various changes can be made. For example, the generation unit 132 can determine whether to perform switching of the microservices between the MEC devices 300 by using a learning model. The learning model is, for example, a model, which is generated by using, as inputs, metric information such as microservices of the switching source MEC device and metric information such as microservices of the switching destination MEC device and using learning information to output information indicating whether to perform switching of microservices between the MEC devices 300, and is generated by, for example, a model such as a convolutional neural network.

In a case where it is determined to perform switching of the microservice of the target application from the switching source MEC device to the switching destination MEC device, the generation unit 132 generates network change information that is information related to switching of the target microservice from the switching source MEC device to the switching destination MEC device.

The network change information is information for causing the switching source MEC device and the switching destination MEC device to perform switching of the target microservice from the switching source MEC device to the switching destination MEC device. The network change information includes, for example, information indicating a connection configuration with the user U of each of the switching source MEC device and the switching destination MEC device in a case where the target microservice is switched from the switching source MEC device to the switching destination MEC device, and the like, but is not limited to such an example. The generation unit 132 outputs the generated network change information to the control unit 133.

### [2.3.3. Control Unit 133]

The control unit 133 outputs, to each of the MEC devices 300, a network change request that causes the plurality of MEC devices 300 to perform switching of the target microservice, which is a microservice of the application being used by the user U, based on the network change information generated by the generation unit 132.

The control unit 133 outputs the network change request for switching the target microservice from the switching source MEC device to the switching destination MEC device, to the switching source MEC device and the switching destination MEC device, based on the switching information which is output from the generation unit 132. Accordingly, the target microservice that is the microservice of the application being used by the user U is switched from the switching source MEC device to the switching destination MEC device.

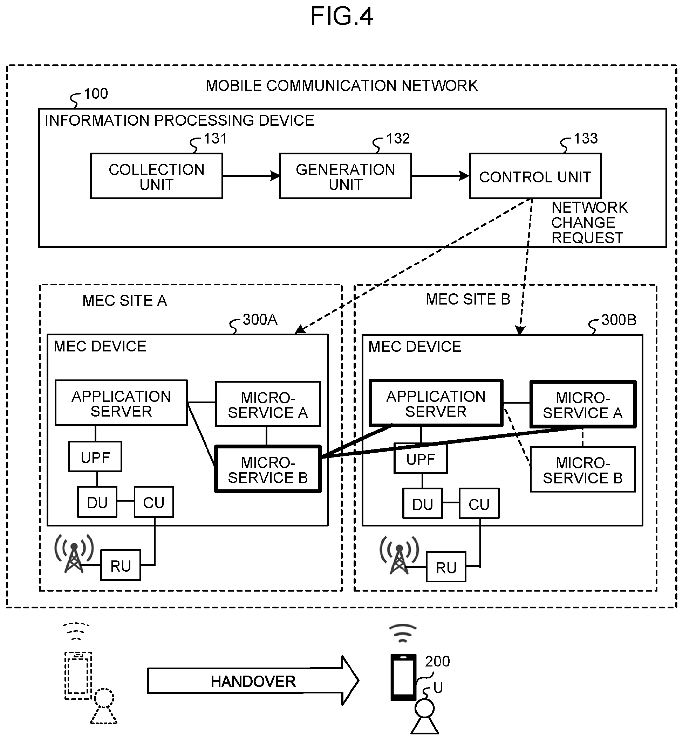

FIG. 4 is a diagram illustrating an example of a form of performing switching control of the target microservice from the switching source MEC device to the switching destination MEC device by the control unit 133 of the information processing device 100 according to the embodiment. The example illustrated in FIG. 4 illustrates an example in which the connection destination of the wireless terminal 200 is switched from the MEC site A to the MEC site B while the user U of the wireless terminal 200 uses the application implemented on the MEC device 300A at the MEC site A.

In the example illustrated in FIG. 4, a microservice A and a microservice B are included as target microservices, and the microservice A is switched to the MEC device 300B based on the network change request from the control unit 133, but the microservice B is not switched to the MEC device 300B.

In the example illustrated in FIG. 4, the application server of the MEC device 300B, the microservice A of the MEC device 300B, and the microservice B of the MEC device 300A are allocated to the user U of the wireless terminal 200 in which the handover is performed by the switching processing by the control unit 133.

Note that the instances of the application server and the microservice that are allocated only to the user U of the wireless terminal 200 in which the handover is performed and are released from the allocation by switching may be deleted together with the resources allocated to such instances.

### [3. Procedure of Information Processing]

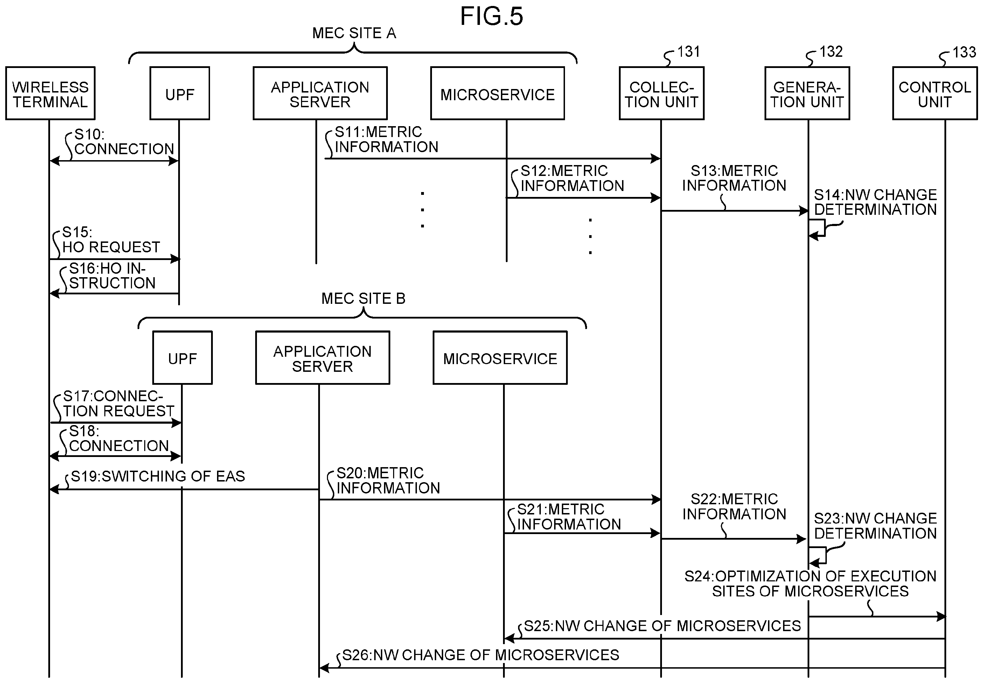

FIG. 5 is a sequence diagram illustrating an information processing procedure according to the embodiment. As illustrated in FIG. 5, in a state where the wireless terminal 200 is connected to the UPF of the MEC site A (step S10), the collection unit 131 collects the metric information from the application server or each of the microservices of the MEC site A (step S11 and step S12).

The processing of step S11 and step S12 is repeatedly performed. In addition, although not illustrated, the collection unit 131 collects the metric information from the application server or each of the microservices of the MEC site B. The metric information collected by the collection unit 131 is output to the generation unit 132 (step S13). The generation unit 132 determines whether or not a network change is required (step S14). The network change is, for example, switching of the MEC device 300 that executes the microservice.

In a case where a handover is required due to movement of the user U, the wireless terminal 200 transmits a handover (HO) request to the MEC site A (step S15). The MEC site A outputs a handover instruction to the wireless terminal 200 in response to the handover request (step S16). When receiving the handover instruction, the wireless terminal 200 transmits a connection request according to the handover instruction to the MEC site B (step S17), and performs connection to the UPF of the MEC site B (step S18).

The application server of the MEC site B requests switching of an edge application service (EAS) as the wireless terminal 200 is connected to the UPF of the MEC site B (step S19). Accordingly, the application server of the application being used by the user U is switched from the application server of the MEC device 300A to the application server of the MEC device 300B.

The collection unit 131 collects the metric information from the application server and each of the microservices of the MEC site B (step S20 and step S21). The processing of step S20 and step S21 is repeatedly performed. The metric information collected by the collection unit 131 is output to the generation unit 132 (step S22).

The generation unit 132 determines whether or not a network change is required in order to optimize the execution site of the microservice based on the metric information which is output from the collection unit 131 in step S13 and step S22 (step S23). In step S23, in order to determine whether or not a network change is required, the generation unit 132 determines whether or not it is necessary to perform switching of each of the microservices of the application being used in the MEC site A by the wireless terminal 200 which is used by the user U and in which the handover is performed.

In a case where it is determined that at least one microservice needs to be switched in order to optimize the execution site of the microservice, the generation unit 132 generates network change information and outputs the generated network change information to the control unit 133 (step S24). The network change information includes information for causing the switching source MEC device and the switching destination MEC device to perform switching of the microservice from the switching source MEC device to the switching destination MEC device.

The control unit 133 transmits a network change request of the microservice to the MEC device 300B based on the network change information acquired from the generation unit 132, and changes the connection relationship such that the microservice of the MEC device 300B can be used by the user U (step S25 and step S26).

### [4. Modification Examples]

In the above-described example, the service using AI has been described as an example of the application implemented in the MEC device 300, but the present invention is not limited to such an example. For example, the application implemented in the MEC device 300 may be an Internet of Things (IoT) application that processes data from IoT in real time, a game application that is an application of a game using augmented reality (AR), or the like.

In addition, the service using AI is not limited to the AI chat service, and may be, for example, a service that performs image recognition using image recognition AI, an autonomous driving service that controls a vehicle using AI, an algorithm, or the like for autonomous driving based on data or the like acquired from various sensors disposed in the vehicle, or the like.

### [5. Effects]

As described above, the information processing device 100 according to the embodiment includes a collection unit 131, a generation unit 132, and a control unit 133. The collection unit 131 collects pieces of metric information respectively indicating a metric in a plurality of microservices built on a microservice architecture in each of a plurality of MEC devices 300 respectively provided to correspond to a plurality of base stations different from each other in a mobile communication network. The generation unit 132 generates, in a case where it is determined, based on the metric information collected by the collection unit 131, to perform switching of the microservices between the plurality of MEC devices in an application being used by a user U of a wireless terminal 200 in which handover is being performed between the plurality of base stations, information related to the switching. The control unit 133 causes the plurality of MEC devices 300 to execute switching of the microservices being used by the user U based on the information generated by the generation unit 132. Accordingly, according to the information processing device 100, it is possible to more appropriately provide a service by the MEC device 300 during a handover of a wireless terminal 200.

In addition, the collection unit 131 collects information including information indicating a delay status in the microservices as the metric information, and the generation unit 132 determines, based on the delay status, whether to perform switching of the microservices between the plurality of MEC devices 300. Accordingly, according to the information processing device 100, it is possible to more appropriately provide a service by the MEC device 300 during a handover of a wireless terminal 200.

In addition, the generation unit 132 determines whether to perform switching of the microservices between the plurality of MEC devices 300 based on a comparison result of delays in the microservices before and after switching between the plurality of MEC devices 300. Accordingly, according to the information processing device 100, it is possible to more appropriately provide a service by the MEC device 300 during a handover of a wireless terminal 200.

In addition, the collection unit 131 collects information including information indicating a resource usage status in the microservices as the metric information, and the generation unit 132 determines, based on the delay status and the resource usage status, whether to perform switching of the microservices between the plurality of MEC devices 300. Accordingly, according to the information processing device 100, it is possible to more appropriately provide a service by the MEC device 300 during a handover of a wireless terminal 200.

In addition, the generation unit 132 determines whether to perform switching of the microservices between the plurality of MEC devices 300 based on comparison results of the delays and the resources in the microservices before and after switching between the plurality of MEC devices 300. Accordingly, according to the information processing device 100, it is possible to more appropriately provide a service by the MEC device 300 during a handover of a wireless terminal 200.

In addition, the plurality of microservices includes services using AI. Accordingly, according to the information processing device 100, it is possible to more appropriately provide a service of the AI application by the MEC device 300 during a handover of the wireless terminal 200.

### [6. Hardware Configuration]

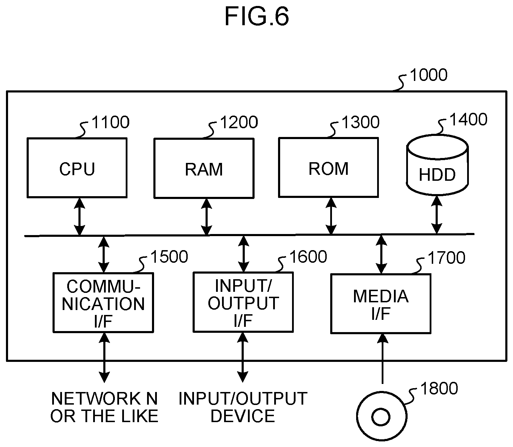

In addition, the information processing device 100 according to the above-described embodiment is implemented by, for example, a computer 1000 having a configuration as illustrated in FIG. 6. FIG. 6 is a hardware configuration diagram illustrating an example of a computer that implements the functions of the information processing device 100. The computer 1000 includes a CPU 1100, a RAM 1200, a ROM 1300, an HDD 1400, a communication interface (I/F) 1500, an input/output interface (I/F) 1600, and a media interface (I/F) 1700.

The CPU 1100 operates based on a program stored in the ROM 1300 or the HDD 1400, and controls each unit. The ROM 1300 stores a boot program executed by the CPU 1100 when the computer 1000 is started, a program depending on hardware of the computer 1000, and the like.

The HDD 1400 stores a program executed by the CPU 1100, data used by the program, and the like. The communication interface 1500 receives data from another device via a predetermined communication network, sends the data to the CPU 1100, and transmits data generated by the CPU 1100 to another device via a predetermined communication network.

The CPU 1100 controls an output device such as a display or a printer and an input device such as a keyboard or a mouse via the input/output interface 1600. The CPU 1100 acquires data from the input device via the input/output interface 1600. In addition, the CPU 1100 outputs the generated data to the output device via the input/output interface 1600.

The media interface 1700 reads a program or data stored in the recording medium 1800 and provides the program or data to the CPU 1100 via the RAM 1200. The CPU 1100 loads the program from the recording medium 1800 onto the RAM 1200 via the media interface 1700, and executes the loaded program. The recording medium 1800 is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the information processing device 100 according to the embodiment, the CPU 1100 of the computer 1000 realizes the function of the processing unit 130 by executing a program loaded on the RAM 1200. The CPU 1100 of the computer 1000 reads and executes these programs from the recording medium 1800, but as another example, these programs may be acquired from another device via a predetermined communication network.

Although some of the embodiments of the present application have been described in detail with reference to the drawings, these are merely examples, and the present invention can be implemented in other forms with modifications and improvements based on the knowledge of those skilled in the art, starting with the embodiments described in the disclosure of the invention.

### [7. Others]

In addition, in the processes described in the embodiment and the modification example, all or some of the processes described as being automatically performed can be manually performed, or all or some of the processes described as being manually performed can be automatically performed by a known method. In addition, the processing procedure, the specific name, and the information including various data and parameters illustrated in the document and the drawings can be arbitrarily changed unless otherwise specified. For example, the various types of information illustrated in each drawing are not limited to the illustrated information.

In addition, each component of each device illustrated in the drawings is functionally conceptual, and is not necessarily physically configured as illustrated in the drawings. That is, a specific form of distribution and integration of each device is not limited to the illustrated form, and all or a part of the configurations can be functionally or physically distributed and integrated in an arbitrary unit according to various loads, usage conditions, and the like.

In addition, the above-described embodiment and the modification example can be appropriately combined within a range that does not contradict processing contents.

In addition, the "part (section, module, unit)" described above can be read as "means", "circuit", or the like. For example, the acquisition unit can be replaced with acquisition means or an acquisition circuit.

### Reference Signs List

- 100: INFORMATION PROCESSING DEVICE
- 110: COMMUNICATION UNIT
- 120: STORAGE UNIT
- 130: PROCESSING UNIT
- 131: COLLECTION UNIT
- 132: GENERATION UNIT
- 133: CONTROL UNIT
- 200: WIRELESS TERMINAL
- 300, 300A, 300B: MEC DEVICE

## Claims

1. An information processing device comprising:
a collection unit that collects pieces of metric information respectively indicating a metric in a plurality of microservices built on a microservice architecture in each of a plurality of MEC devices respectively provided to correspond to a plurality of base stations different from each other in a mobile communication network;
a generation unit that generates, in a case where it is determined, based on the metric information collected by the collection unit, to perform switching of the microservices between the plurality of MEC devices in an application being used by a user of a wireless terminal in which handover is being performed between the plurality of base stations, information related to the switching; and
a control unit that causes the plurality of MEC devices to execute switching of the microservices being used by the user based on the information generated by the generation unit.

2. The information processing device according to claim 1, wherein
the collection unit collects information including information indicating a delay status in the microservices as the metric information, and
the generation unit determines, based on the delay status, whether to perform switching of the microservices between the plurality of MEC devices.

3. The information processing device according to claim 2, wherein
the generation unit determines whether to perform switching of the microservices between the plurality of MEC devices based on a comparison result of delays in the microservices before and after switching between the plurality of MEC devices.

4. The information processing device according to claim 2 or 3, wherein
the collection unit collects, as the metric information, information including information indicating a resource usage status in the microservices, and
the generation unit determines, based on the delay status and the resource usage status, whether to perform switching of the microservices between the plurality of MEC devices.

5. The information processing device according to claim 4, wherein
the generation unit determines whether to perform switching of the microservices between the plurality of MEC devices based on comparison results of delays and resources in the microservices before and after switching between the plurality of MEC devices.

6. The information processing device according to any one of claims 1 to 3, wherein
the plurality of microservices include services using AI.

7. An information processing method executed by a computer, the method comprising:
a collection step of collecting pieces of metric information respectively indicating a metric in a plurality of microservices built on a microservice architecture in each of a plurality of MEC devices respectively provided to correspond to a plurality of base stations different from each other in a mobile communication network;
a generation step of generating, in a case where it is determined, based on the metric information collected by the collection step, to perform switching of the microservices between the plurality of MEC devices in an application being used by a user of a wireless terminal in which handover is being performed between the plurality of base stations, information related to the switching; and
a control step of causing the plurality of MEC devices to execute switching of the microservices being used by the user based on the information generated by the generation step.

8. An information processing program causing a computer to execute:
a collection procedure of collecting pieces of metric information respectively indicating a metric in a plurality of microservices built on a microservice architecture in each of a plurality of MEC devices respectively provided to correspond to a plurality of base stations different from each other in a mobile communication network;
a generation procedure of generating, in a case where it is determined, based on the metric information collected by the collection procedure, to perform switching of the microservices between the plurality of MEC devices in an application being used by a user of a wireless terminal in which handover is being performed between the plurality of base stations, information related to the switching; and
a control procedure of causing the plurality of MEC devices to execute switching of the microservices being used by the user based on the information generated by the generation procedure.
